# EUROPEAN PATENT APPLICATION

(11) **EP 2 259 591 A2**
(43) Date of publication of application: **08.12.2010**
(21) Application number: 09723898.4
(22) Date of filing: 27.03.2009
(51) Int. Cl.: H04N 7/173, H04N 7/08, H04N 7/24, H04N 5/445

(54) **DATA RECEIVING METHOD AND DEVICE FOR APPLICATIONS PROVIDING AN IPTV COMMUNICATIONS SERVICE**

(30) Priority: 28.03.2008 US 40309 P; 24.07.2008 US 83309 P; 06.08.2008 US 86563 P
(71) Applicant: Samsung Electronics Co., Ltd., Suwon-si, Gyeonggi-do 442-742 (KR)
(72) Inventor: KIM, Mun-Jo, Suwon-si Gyeonggi-do 441-735 (KR); RHIM, Eun-Hee, Yongin-si Gyeonggi-do 446-720 (KR); HWANG, In-Chul, Suwon-si Gyeonggi-do 443-727 (KR)
(74) Representative: Clark, David James
(86) International application number: PCT/KR2009/001556
(87) International publication number: WO 2009/120030

(57) **Abstract**

A method and apparatus for receiving an application for providing an internet protocol television (IPTV) communication service. The method includes: acquiring IP address information for initiating an IPTV service provider discovery at an entry point for searching for a service provider; receiving information regarding an IPTV service provider from an IPTV service provider discovery entity apparatus by using the IP address information; and acquiring information regarding the application for providing the IPTV communication service based on the information regarding the IPTV service provider.

## Description

### TECHNICAL FIELD

The present invention relates to a method and apparatus for receiving information regarding applications for providing Internet protocol television (IPTV) communication service.

### BACKGROUND ART

Internet protocol television (IPTV) service is a service for providing information, moving picture contents, and broadcasting on a TV through an IP network, that is, an ultra-high speed internet network. As services combining communication and broadcasting have been widely distributed, there is increased interest in the IPTV service. Therefore, wide distribution of the IPTV service may largely affect the content industry and electrical appliances, as well as the communication and broadcasting industries.

According to a conventional art, in order for a subscriber of the IPTV service to use the IPTV service through the IP network, the subscriber requires a set-top box that varies depending on an IPTV vendor. Only the user having the IPTV set-top box that is manufactured according to specifications set by the IPTV service provider may use the IPTV service of the corresponding IPTV service provider. For example, when there are three IPTV service providers, that is, Company A, Company B, and Company C, subscribers who bought the set-top box of company A may only use the IPTV service provided by company A, and they should buy an additional set-top box of company B or company C in order to subscribe for the IPTV service provided by company B or company C. The above problem of compatibility between the IPTV service and the set-top box limits a range of selection, and thus, quality of the IPTV service may be degraded and expansion of the IPTV service may be restricted.

In order to address the above compatibility problem, an open IPTV forum has been recently established to discuss standardization of the set-top box. In this forum, a common standard that is independent from the IPTV service providers and providing the service subscribers with the IPTV service based on the common standard are being discussed.

The open IPTV forum aims to make an interface and a hardware platform that are not dependent upon the IPTV service providers so that the subscriber may easily use the IPTV services provided by IPTV service providers. According to the open IPTV forum architecture, the subscriber may use the IPTV services provided by different IPTV service providers even when the subscriber does not have different set-top boxes, and thus, the range of services that may be selected by the subscriber can be expanded.

In order for the subscriber to use the IPTV services provided by the different IPTV service providers, a functional architecture according to the open IPTV forum includes devices for relaying services of the plurality of IPTV service providers to a residential network. Examples of the relaying devices include entities such as an application gateway (AG), an IMS gateway (IG), and CSP gateway (CG) according to the functional architecture of the open IPTV forum. The above relaying devices receive the IPTV services provided from a provider network and relay the IPTV services to terminal devices in the residential network.

### DETAILED DESCRIPTION OF THE INVENTION

### TECHNICAL SOLUTION

The present invention provides a method and apparatus for receiving information about applications providing an internet protocol television (IPTV) communication service, and a computer readable recording medium having embodied thereon the method.

### ADVANTAGEOUS EFFECTS

According to embodiments of the present invention, metadata including uniform resource identifier (URI) information regarding an application for providing an IPTV communication service is defined by using an extensible markup language (XML) schema, and thus, a user of an internet protocol television (IPTV) terminal function (ITF) entity apparatus accesses the application for providing the IPTV communication service by using the metadata so as to use a predetermined communication service provided by a service provider.

### DESCRIPTION OF THE DRAWINGS

FIG. 1 is a schematic diagram illustrating a method of transmitting/receiving information about applications for providing an internet protocol television (IPTV) communication service, according to an embodiment of the present invention;
FIG. 2 is a schematic diagram showing a flow of information about the applications for providing an IPTV communication service, according to an embodiment of the present invention;
FIG. 3 is a flowchart illustrating processes of transmitting/receiving information about the applications for providing the IPTV communication service in an unmanaged network model, according to an embodiment of the present invention;
FIG. 4 is a flowchart illustrating processes of receiving information about the applications for providing the IPTV communication service from an apparatus performing as an IPTV service provider searching entity in a managed network model, according to another embodiment of the present invention;
FIG. 5 is a flowchart illustrating processes of receiving information about applications for providing the IPTV communication service from an apparatus performing as an IPTV service discovery entity by using an SIP protocol in a managed network model, according to another embodiment of the present invention;
FIG. 6 is a flowchart of an operation of receiving information regarding an IPTV communication service-providing application from an IPTV service discover entity apparatus in a managed network model by using a hypertext transfer protocol (HTTP) protocol or a DVB SD&S transport protocol (DVB STP) protocol, according to another embodiment of the present invention;
FIG. 7 illustrates a structure of a communication offering record including metadata regarding an IPTV communication service-providing application, according to an embodiment of the present invention;
FIG. 8A illustrates a 'ServiceDiscovery' extensible markup language (XML) schema including a communication offering record, according to an embodiment of the present invention;
FIG. 8B shows an XML schema of a communication offering record according to an embodiment of the present invention;
FIG. 9 shows a structure of a communication offering record including metadata regarding an application providing an IPTV communication service, according to another embodiment of the present invention;
FIG. 10 shows a structure of a communication offering record including metadata regarding an IPTV communication service-providing application, according to another embodiment of the present invention;
FIG. 11 is a table showing AppMainType values and AppSubType values of a communication offering record, according to another embodiment of the present invention;
FIG. 12 shows XML-based metadata according to a structure of communication offering record, according to another embodiment of the present invention; and
FIG. 13 is a block diagram of an open IPTV terminal function (OITF) apparatus according to an embodiment of the present invention.

### BEST MODE

According to an aspect of the present invention, there is provided a method of receiving information regarding an application for providing an internet protocol television (IPTV) communication service, the method including: acquiring IP address information for initiating an IPTV service provider discovery at an entry point for searching for a service provider; receiving information regarding an IPTV service provider from an IPTV service provider discovery entity apparatus by using the IP address information; and acquiring information regarding the application for providing the IPTV communication service based on the information regarding the IPTV service provider.

The application for providing the IPTV communication service may include at least one of a chatting application, an instant message application, a caller identification (ID) application, and a presence application.

When the information regarding the IPTV service provider includes information for acquiring the application for providing the IPTV communication service, the method may further include acquiring information regarding at least one application for providing the IPTV communication service from the IPTV service discovery entity apparatus by using the information for acquiring the application for providing the IPTV communication service.

The information regarding the application for providing the IPTV communication service may include uniform resource identifier (URI) information regarding the application for providing the IPTV communication service, which may access at least one IPTV communication service provided by the IPTV service provider.

The information regarding the application for providing the IPTV communication service may include at least one of an application ID that may access at least one IPTV communication service provided by the IPTV service provider, name of the application, URI information for receiving the application icon, a kind of the application, information regarding technology used in the application, priority of the application, URI information for accessing the application through multicast, and URI information for accessing the application through unicast.

The information regarding the application for providing the IPTV communication service may include URI information regarding at least one of the chatting application, the instant message application, the caller ID application, and the presence application provided by the IPTV service provider.

The information regarding the application for providing the IPTV communication service may be provided as a part of a communication offering record.

The information regarding the IPTV service provider and the information regarding the application for providing the IPTV communication service may be written in extensible markup language (XML).

According to another aspect of the present invention, there is provided a computer readable recording medium having embodied thereon a computer program for executing the above method.

According to another aspect of the present invention, there is provided an open internet protocol television (IPTV) terminal function (OITF) apparatus including: a service provider discovery launcher for acquiring IP address information for initiating an IPTV service provider discovery at an entry point for searching for the service provider; a service provider information receiving unit for receiving information regarding the IPTV service provider from an IPTV service provider discovery entity apparatus by using the IP address information; and an application information acquiring unit for acquiring information regarding an application for providing an IPTV communication service based on the information regarding the IPTV service provider.

### MODE OF THE INVENTION

The present invention will now be described more fully with reference to the accompanying drawings, in which exemplary embodiments of the invention are shown. In the drawings, like reference numerals denote like elements and the thicknesses of layers and regions are exaggerated for clarity.

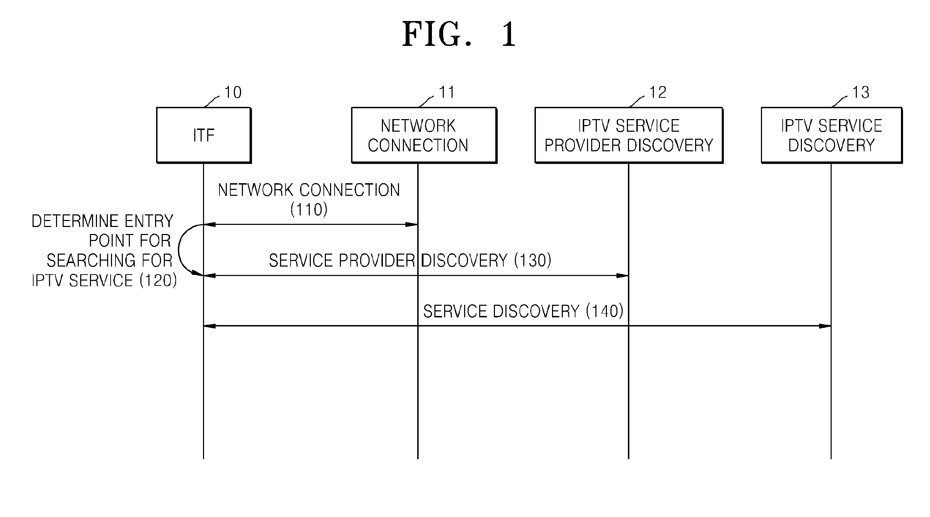

FIG. 1 is a schematic diagram illustrating a method of transmitting/receiving information about applications for providing an internet protocol television (IPTV) communication service, according to an embodiment of the present invention.

In FIG. 1, at least one IPTV service provider provides a predetermined IPTV service to a user terminal, that is, an apparatus 10 for performing a function of an IPTV terminal function (ITF) entity ('ITF entity apparatus 10'). However, it would have been obvious to one of ordinary skill in the art to apply embodiments of the present invention to provide other services, instead of the IPTV service.

In operation 110, the ITF entity apparatus 10 and a network attachment entity apparatus 11 form an IPTV network. The ITF entity apparatus 10 acquires an IP address from the network attachment entity apparatus 11 to form the IPTV network. The network attachment entity apparatus 11 may be an apparatus for managing network connections, such as, a wide area network (WAN) gateway, and may perform user authentication of a network level, and access configuration. The ITF entity apparatus 10 may function as a user domain entity that is provided with an IPTV service from an IPTV service provider to use the IPTV service, and may perform a plurality of entity functions.

In operation 120, the ITF entity apparatus 10 determines an entry point for searching for the IPTV service. The ITF entity apparatus 10 may search for the IPTV service provider, prior to searching for the IPTV service. Thus, in operation 120, the ITF entity apparatus 10 determines the entry point that is the same as an IP address of an apparatus 12 for performing a function of an IPTV service provider discovery entity ('IPTV service provider discovery entity apparatus 12'). Information of the IP address of the IPTV service provider discovery entity apparatus 12 may be received from the network attachment entity apparatus 11 during the formation of the IPTV network, or alternatively, may be contained in the ITF entity apparatus 10 rather than being received from an external source.

In operation 130, the ITF entity apparatus 10 accesses the IPTV service provider discovery entity apparatus 12, and searches for information of at least one IPTV service provider. A single ITF entity apparatus 10, that is, a single user terminal may search for information of a plurality of different IPTV service providers.

The information of the IPTV service provider may include uniform resource identifier (URI) information regarding applications providing an IPTV communication service, and information regarding a user interface (UI) that is used when a user of the ITF entity apparatus 10 selects an IPTV service provider. For example, the information related to a UI, such as logos, trademarks or icons of IPTV service providers is provided to the ITF entity apparatus 10, and then is displayed to the user by the ITF entity apparatus 10. Thus, the user of the ITF entity apparatus 10 may select one IPTV service provider from among the IPTV service providers.

Since the information regarding the IPTV service providers is provided to the ITF entity apparatus 10 through the IPTV service provider discovery entity apparatus 12, the user may select a predetermined IPTV service provider through the ITF entity apparatus 10, and may use an IPTV service of the selected IPTV service provider.

The user of the ITF entity apparatus 10 may access applications for providing the IPTV communication service provided by the IPTV service provider that is selected based on the URI information regarding the IPTV communication service-providing applications. The IPTV communication service-providing applications may include a chatting application, an instant message application, a caller identification (ID) application, and a presence application. The chatting application provides a chatting service, and the instant message application provides a message service. The caller ID application provides a service using the caller ID. The presence application provides a service using an on-line status and location of the user in a system such as a voice over IP (VOIP).

In operation 140, the ITF entity apparatus 10 accesses a predetermined IPTV communication service based on the URI information regarding the IPTV communication service-providing applications, which is received in operation 130. When the user selects one IPTV service provider from among a plurality of IPTV service providers in operation 130, the ITF entity apparatus 10 may access a URI for the IPTV communication service-providing applications of the selected IPTV service provider, and may be provided with the predetermined IPTV communication service.

According to another embodiment of the present invention, the ITF entity apparatus 10 may receive URI information of an apparatus 13 for performing a function of an IPTV service discovery entity ('IPTV service discovery entity apparatus 13'), in operation 130. In operation 140, the ITF entity apparatus 10 may access the IPTV service discovery entity apparatus 13 according to a URI address of the IPTV service discovery entity apparatus 13, which is received in operation 130, and may search for information regarding at least one IPTV service. The information regarding the IPTV service may include URI information regarding applications providing IPTV communication service. The ITF entity apparatus 10 may access the applications providing the IPTV communication service based on the URI information regarding the received applications providing the IPTV communication service, which is received in operation 140.

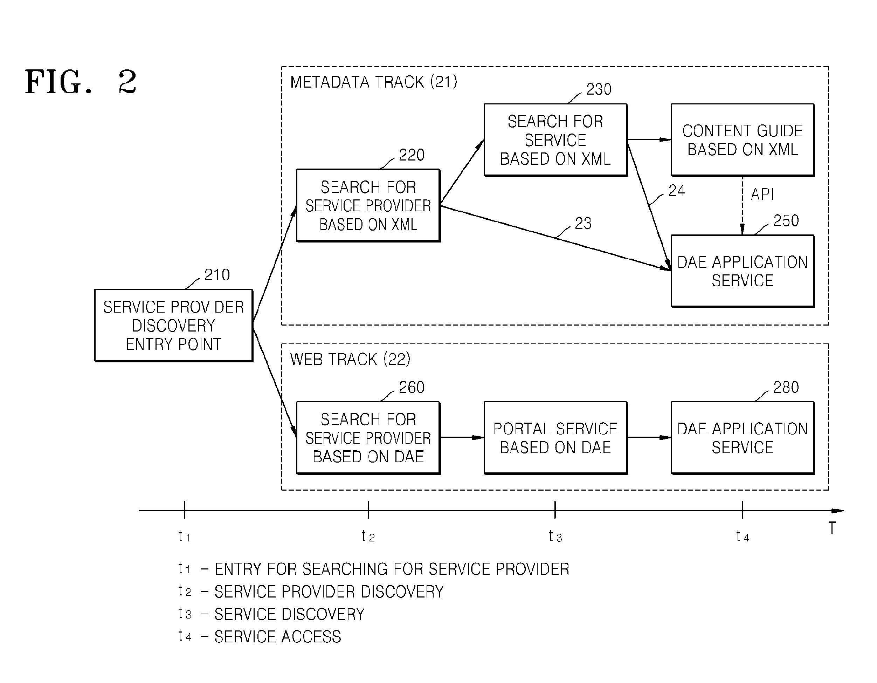

FIG. 2 is a schematic diagram illustrating flow of information of an application providing an IPTV communication service, according to an embodiment of the present invention.

A data flow for providing information for finally accessing applications providing an IPTV service from a service provider discovery entry point 210 may include two flows of a web track 22 and a metadata track 21. The service provider discovery entry point 210 acquires IP address information for initiating the discovery of the IPTV service provider from an external source. In an unmanaged network model, the IP address information may be configured in advance or configured manually, and in a managed network model, the IP address information may be received from an IMS gateway (IG) entity apparatus in a process of searching for the IG. The method of acquiring the IP address information is described in the functional architecture standard of the open IPTV forum, and thus, detailed descriptions are not provided here.

When the ITF entity apparatus 10 is based on the flow of the web track 22, the ITF entity apparatus 10 operates according to a Declarative Application Environment (DAE) application that is provided as a web service from an operation where a service provider is searched for (operation 260). The ITF entity apparatus 10 may be included in an open ITF (OITF) entity apparatus.

When the ITF entity apparatus 10 is based on the flow of the metadata track 21, the ITF entity apparatus 10 accesses the IPTV service provider discovery entity apparatus 12 using IP address information which is acquired from the service provider discovery entry point 210, and searches for extensible markup language (XML)-based information regarding an IPTV service provider (operation 220). The XML-based information regarding the IPTV service provider may include URI information regarding the IPTV communication service-providing application 250. The user of the ITF entity apparatus 10 may access applications providing the IPTV communication service through the URI information regarding the IPTV communication service-providing application 250 (operation 23).

According to another embodiment of the present invention, when the ITF entity apparatus 10 is based on the flow of the metadata track 21, the ITF entity apparatus 10 may access the IPTV service provider discovery entity apparatus 12 using IP address information which is acquired from the service provider discovery entry point 210, and may receive XML-based URI information regarding the IPTV service discovery entity apparatus 13 (operation 220). The ITF entity apparatus 10 may access the IPTV service discovery entity apparatus 13 according to a URI address of the IPTV service discovery entity apparatus 13, which is contained in the received URI information, and may search for XML-based information regarding at least one IPTV service (operation 230). The URI information regarding the IPTV service may include URI information regarding an application providing the IPTV communication service 250. The user of the ITF entity apparatus 10 may access an application providing the IPTV communication service 250 through the URI information regarding the IPTV communication service-providing application 250 (operation 24).

According to an embodiment of the present invention, metadata including URI information regarding the IPTV communication service-providing application is defined by using a XML schema, and thus a user of an ITF entity apparatus accesses the IPTV communication service-providing application by using the metadata so as to use a predetermined service provided by a service provider.

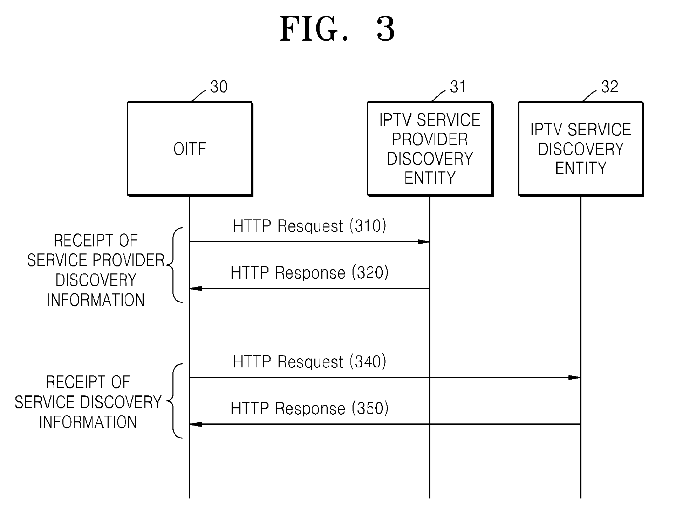

FIG. 3 is a flowchart of an operation of transmitting and receiving information regarding an IPTV communication service-providing application in an unmanaged network model, according to an embodiment of the present invention.

Referring to FIG. 3, an open IPTV terminal function (OITF) entity apparatus 30, an IPTV service provider discovery entity apparatus 31, and an IPTV service discovery entity apparatus 32 are illustrated. The OITF entity apparatus 30 is an apparatus for performing entity functions of a user domain according to open IPTV forum architecture. The IPTV service provider discovery entity apparatus 31, and the IPTV service discovery entity apparatus 32 are apparatus for performing entity functions of a network domain that is managed by an IPTV service provider, or a network provider.

The OITF entity apparatus 30 accesses an IPTV service through gateways of the user domain, that is, an application gateway (AG) functional entity apparatus and an IP multimedia subsystem (IMS) gateway (IG) functional entity apparatus. An apparatus, which finally uses the IPTV service such as a TV, may be the OITF entity apparatus 30.

Referring to FIG. 3, in operation 310, the OITF entity apparatus 30 transmits a message requesting for information of at least one IPTV service provider to the IPTV service provider discovery entity apparatus 31. The information of the IPTV service provider includes metadata including URI information of an IPTV communication service providing application. According to the present embodiment, the OITF entity apparatus 30 transmits a hypertext transfer protocol (HTTP) REQUEST message that is generated according to HTTP to the IPTV service provider discovery entity apparatus 31. However, it would have been obvious to one of ordinary skill in the art to use another protocol and another message.

In operation 320, the IPTV service provider discovery entity apparatus 31 transmits a response message including information of at least one IPTV service provider to the OITF entity apparatus 30, according to the received request message in operation 310. According to the present embodiment, the IPTV service provider discovery entity apparatus 31 transmits the HTTP RESPONSE message that is generated according to HTTP to the OITF entity apparatus 30. However, it would have been obvious to one of ordinary skill in the art to use another protocol and another message.

A user of the OITF entity apparatus 30 may access an IPTV communication service-providing application provided through URI information regarding an IPTV communication service-providing application, which is contained in information regarding the IPTV service provider.

According to another embodiment of the present invention, the OITF entity apparatus 30 accesses the IPTV service provider discovery entity apparatus 12, and receives XML-based URI information regarding the IPTV service discovery entity apparatus 32. Then, in operation 340, the OITF entity apparatus 30 accesses the IPTV service discovery entity apparatus 32, and transmits a request message for information about at least one IPTV service to the IPTV service discovery entity apparatus 32. The information regarding the IPTV service includes metadata including URI information regarding an application providing an IPTV communication service. According to the present embodiment, the OITF entity apparatus 30 transmits an HTTP REQUEST message that is generated according to HTTP to the IPTV service discovery entity apparatus 32. However, it would have been obvious to one of ordinary skill in the art to use another protocol and another message.

In operation 350, the IPTV service discovery entity apparatus 32 transmits a response message including the information regarding at least one IPTV service to the OITF entity apparatus 30, according to the received request message in operation 340. According to the present embodiment, the IPTV service discovery entity apparatus 32 transmits a HTTP RESPONSE message that is generated according to HTTP to the OITF entity apparatus 30. However, it would have been obvious to one of ordinary skill in the art to use another protocol and another message.

A user of the OITF entity apparatus 30 may access an application providing an IPTV communication service through URI information regarding an application providing the IPTV communication service, which is contained in the information of the IPTV service.

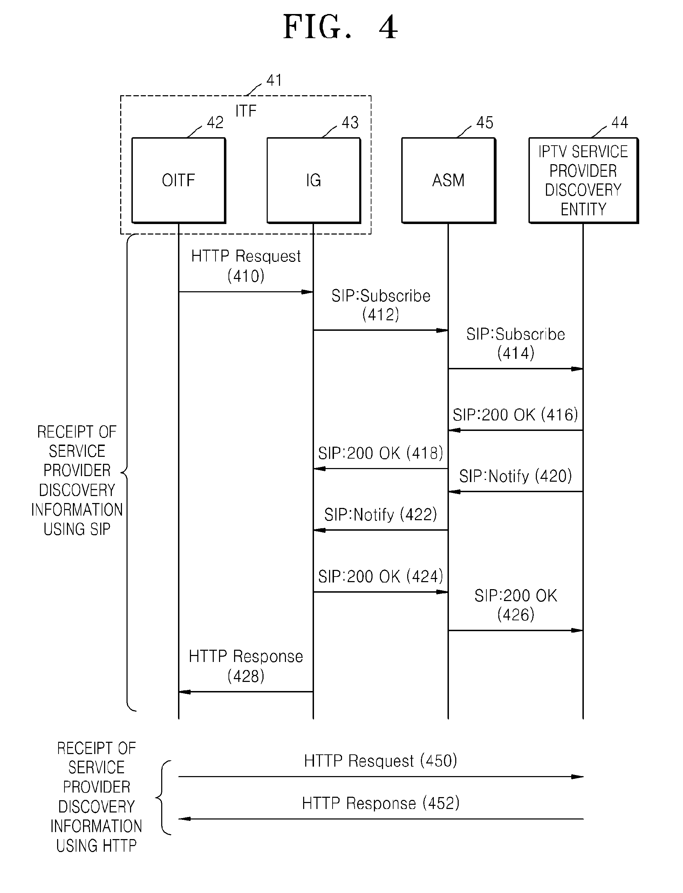

FIG. 4 is a flowchart of an operation of receiving information of an IPTV communication service-providing application from an IPTV service provider discovery entity apparatus in a managed network model, according to another embodiment of the present invention.

In FIG. 4, an OITF entity apparatus 42, an IMS gateway functional (IG) entity apparatus 43, an authentication and session management (ASM) entity apparatus 45, and an IPTV service provider discovery entity apparatus 44 are illustrated. An ITF entity apparatus 41 may be an apparatus for performing entity functions of a user domain, and may perform a plurality of entity functions. In FIG. 4, the ITF entity apparatus 41 includes the OITF entity apparatus 42 and the IG entity apparatus 43. The OITF entity apparatus 42 and the IG entity apparatus 43 perform entity functions of a user domain according to the open IPTV forum architecture. The ASM entity apparatus 45 and the IPTV service provider discovery entity apparatus 44 perform entity functions of a network domain that is managed by a network provider. The IG entity apparatus 43 and the ASM entity apparatus 45 perform entity functions that are required in a managed model network from among IPTV service models according to the open IPTV forum architecture.

The OITF entity apparatus 42 accesses an IPTV service through gateways of the user domain, that is, an AG functional entity apparatus and the IG entity apparatus 43. An apparatus, which finally uses the IPTV service such as a TV, may be the OITF entity apparatus 42.

The IG entity apparatus 43 allows the OITF entity apparatus 42 to access the IPTV service based on an IP multimedia subsystem (IMS) core network. The IG entity apparatus 43 relays apparatuses for performing entity functions of a network domain, that is, the ASM entity apparatus 45 and the IPTV service provider discovery entity apparatus 44, in order for the OITF entity apparatus 42 to access the IPTV service.

The ASM entity apparatus 45 performs access management and IPTV service session management so that only a specific user may access a managed network.

The IPTV service provider discovery entity apparatus 44 generates information regarding at least one service provider.

Referring to FIG. 4, in operation 410, the OITF entity apparatus 42 transmits a request message for information regarding at least one IPTV service provider to the IG entity apparatus 43. The information regarding the IPTV service provider includes metadata including URI information regarding an IPTV communication service-providing application. The OITF entity apparatus 42 and the IG entity apparatus 43 are apparatuses for performing entity functions of a user domain, and transmit and receive messages that are written in a predetermined message format defined therebetween. In FIG.4, the OITF entity apparatus 42 transmits a HTTP REQUEST message generated according to HTTP to the IG entity apparatus 43.

In operation 412, the IG entity apparatus 43 generates a SIP SUBSCRIBE message, according to the received request message in operation 410, and transmits the SIP SUBSCRIBE message to the ASM entity apparatus 45. The SIP SUBSCRIBE message is a message to be transmitted to the IPTV service provider discovery entity apparatus 44. However, since the ASM entity apparatus 45 performs the IPTV service session management in the managed network model, the SIP SUBSCRIBE message is transmitted to the IPTV service provider discovery entity apparatus 44 through the ASM entity apparatus 45.

In operation 414, the ASM entity apparatus 45 transmits the SIP SUBSCRIBE that is received from the IG entity apparatus 43 in operation 412 to the IPTV service provider discovery entity apparatus 44.

In operation 416, the IPTV service provider discovery entity apparatus 44 transmits a SIP 200 OK message informing that the SIP SUBSCRIBE message was normally received in operation 414 to the ASM entity apparatus 45.

In operation 418, the ASM entity apparatus 45 transmits the received SIP 200 OK received in operation 416 to the IG entity apparatus 43.

In operation 420, the IPTV service provider discovery entity apparatus 44 transmits a SIP NOTIFY message containing information regarding at least one service provider to the ASM entity apparatus 45.

In operation 422, the ASM entity apparatus 45 transmits the SIP NOTIFY message that is received from the IPTV service provider discovery entity apparatus 44 in operation 420 to the IG entity apparatus 43.

In operation 424, the IG entity apparatus 43 transmits the SIP 200 OK message informing that the SIP NOTIFY message was normally received in operation 422 to the ASM entity apparatus 45.

In operation 426, the ASM entity apparatus 45 transmits the received SIP 200 OK message in operation 424 to the IPTV service provider discovery entity apparatus 44.

In operation 428, the IG entity apparatus 43 transmits a response message containing information regarding at least one IPTV service provider to the OITF entity apparatus 42. The response message containing the information regarding at least one service provider is generated in a predetermined message format that is defined between the OITF entity apparatus 42 and the IG entity apparatus 43, and is transmitted to the OITF entity apparatus 42. In FIG. 4, the IG entity apparatus 43 transmits a HTTP RESPONSE message generated according to HTTP to the OITF entity apparatus 42.

A user of the OITF entity apparatus 42 may access IPTV communication service-providing applications through URI information regarding an IPTV communication service-providing application, which is contained in the information regarding the IPTV service provider.

According to the present embodiment, a message is transmitted between apparatuses for performing entity functions by using HTTP and SIP. However, it would have been obvious to one of ordinary skill in the art that another protocol and another message may be used.

According to another embodiment of the present invention, in operation 450, the OITF entity apparatus 42 transmits a request message for information regarding at least one IPTV service provider to the IPTV service provider discovery entity apparatus 44. The information regarding the IPTV service provider includes metadata including URI information regarding an IPTV communication service-providing application. According to the present embodiment, the OITF entity apparatus 42 transmits the HTTP REQUEST message generated according to HTTP to the IPTV service provider discovery entity apparatus 44. However, it would have been obvious to one of ordinary skill in the art that another protocol and another message may be used.

In operation 452, the IPTV service provider discovery entity apparatus 44 transmits a response message containing information regarding at least one IPTV service provider to the OITF entity apparatus 42, according to the received request message in operation 450. According to the present embodiment, the IPTV service provider discovery entity apparatus 44 transmits a HTTP RESPONSE message generated according to HTTP to the OITF entity apparatus 42. However, it would have been obvious to one of ordinary skill in the art that another protocol and another message may be used.

The user of the OITF entity apparatus 42 may access applications providing IPTV communication service through URI information regarding an IPTV communication service-providing application, which is contained in the information regarding the IPTV service provider.

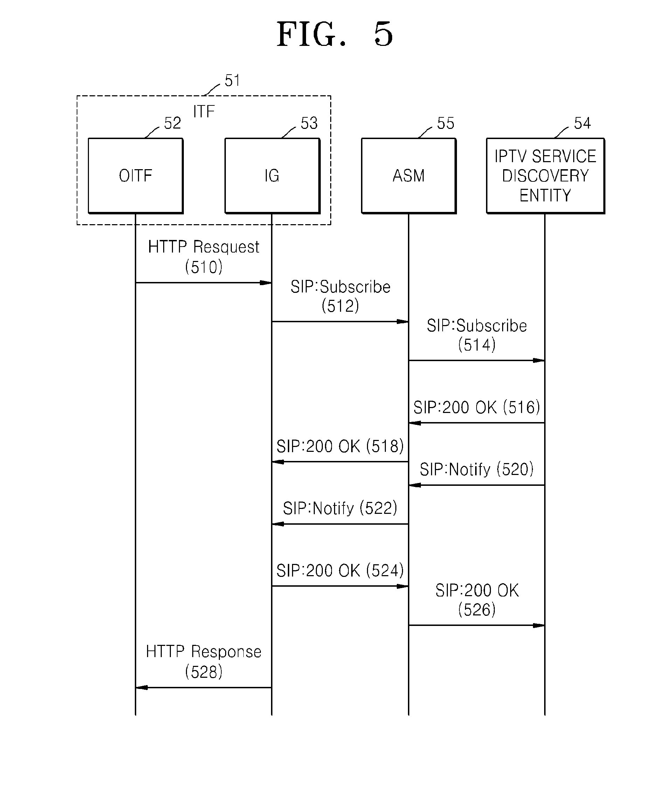

FIG. 5 is a flowchart of an operation of receiving information of an IPTV communication service-providing application from an IPTV service discovery entity apparatus by using an SIP protocol in a managed network model, according to another embodiment of the present invention.

The operation of FIG. 5 is the same as the operation of FIG. 4 except that information regarding an IPTV service, which includes information regarding an IPTV communication service-providing application, is searched for accessing an IPTV service discovery entity apparatus 54.

Thus, an IG entity apparatus 53 generates a SIP SUBSCRIBE message for requesting information regarding a service provider or information regarding a service. The IPTV service discovery entity apparatus 54 generates a SIP NOTIFY message containing information regarding at least one service provided by a predetermined service provider.

In operation 510, an OITF entity apparatus 52 transmits a request message for information regarding IPTV service to the IG entity apparatus 53. The information regarding the IPTV service includes metadata containing URI information regarding applications providing IPTV communication service. The OITF entity apparatus 52 and the IG entity apparatus 53 are apparatuses for performing entity functions of a user domain, and transmit and receive messages that are written in a predetermined message format defined therebetween. In FIG. 5, the OITF entity apparatus 52 transmits a HTTP REQUEST message generated according to HTTP to the IG entity apparatus 53.

In operation 512, the IG entity apparatus 53 generates a SIP SUBSCRIBE message according to the received request message in operation 510, and transmits the SIP SUBSCRIBE message to an ASM entity apparatus 55. The SIP SUBSCRIBE message is a message to be transmitted to the IPTV service discovery entity apparatus 54.

In operation 514, the ASM entity apparatus 55 transmits the SIP SUBSCRIBE message that is received from the IG entity apparatus 53 in operation 512 to the IPTV service discovery entity apparatus 54.

In operation 516, the IPTV service discovery entity apparatus 54 transmits a SIP 200 OK message informing that the SIP SUBSCRIBE message was normally received in operation 514 to the ASM entity apparatus 55.

In operation 518, the ASM entity apparatus 55 transmits the received SIP 200 OK message in operation 516 to the IG entity apparatus 53.

In operation 520, the IPTV service discovery entity apparatus 54 transmits a SIP NOTIFY message containing information regarding at least one service to the ASM entity apparatus 55.

In operation 522, the ASM entity apparatus 55 transmits the SIP NOTIFY that is received from the IPTV service discovery entity apparatus 54 in operation 520 to the IG entity apparatus 53.

In operation 524, the IG entity apparatus 53 transmits a SIP 200 OK message informing that the SIP NOTIFY message was normally received in operation 522 to the ASM entity apparatus 55.

In operation 526, the ASM entity apparatus 55 transmits the received SIP 200 OK message in operation 524 to the IPTV service discovery entity apparatus 54.

In operation 528, the IG entity apparatus 53 transmits a response message containing information regarding at least one service to the OITF entity apparatus 52. The response message containing the information regarding at least one service is generated in a predetermined message format that is defined between the OITF entity apparatus 52 and the IG entity apparatus 53, and is transmitted to the OITF entity apparatus 52. In FIG. 5, the IG entity apparatus 53 transmits a HTTP RESPONSE message generated according to HTTP to the OITF entity apparatus 52.

A user of the OITF entity apparatus 52 may access an application providing an IPTV communication service through URI information regarding the application providing the IPTV communication service, which is contained in the information regarding the IPTV service.

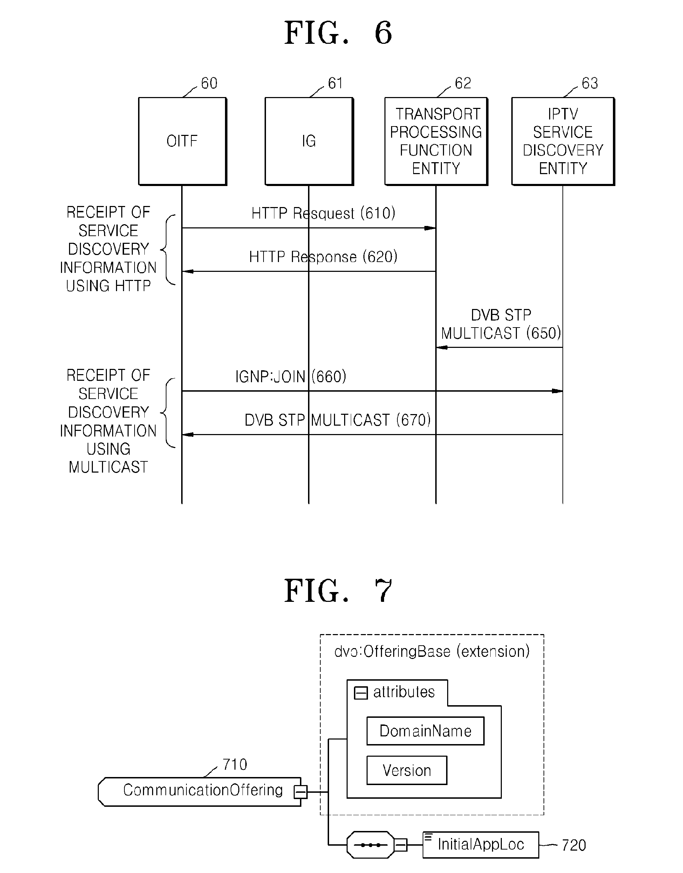

FIG. 6 is a flowchart of an operation of receiving information regarding an IPTV communication service-providing application from an IPTV service discover entity apparatus in a managed network model by using a HTTP protocol or a DVB STP protocol, according to another embodiment of the present invention.

In operation 610, an OITF entity apparatus 60 transmits a request message for information of an IPTV service to an IPTV service discovery entity apparatus 63. The information of the IPTV service includes metadata including URI information regarding an application providing an IPTV communication service. The OITF entity apparatus 60 transmits a HTTP REQUEST message generated according to HTTP to the IPTV service discovery entity apparatus 63. However, it would have been obvious to one of ordinary skill in the art that another protocol and another message may be used.

In operation 620, the IPTV service discovery entity apparatus 63 transmits a response message containing information regarding at least one IPTV service, according to the received request message in operation 610 to the OITF entity apparatus 60. According to the present embodiment, the IPTV service discovery entity apparatus 63 transmits a HTTP PRESPONSE message generated according to HTTP to the OITF entity apparatus 60. However, it would have been obvious to one of ordinary skill in the art that another protocol and another message may be used.

A user of the OITF entity apparatus 60 may access an application providing an IPTV communication service through URI information regarding an application providing the IPTV communication service, which is contained in the information regarding the IPTV service.

According to another embodiment of the present invention, the OITF entity apparatus 60 may receive the information regarding the IPTV service from the IPTV service discovery entity apparatus 63 in a multicast manner using a DVB SD&S transport protocol (DVB STP).

In operation 650, the IPTV service discovery entity apparatus 63 transmits a DVB STP multicast message containing the information regarding the IPTV service to a transport processing function entity apparatus 62. The information regarding the IPTV service includes metadata containing URI information regarding an application providing an IPTV communication service. The transport processing function entity apparatus 62 is an apparatus for performing entity functions of managing a multicast group, and previously receives an internet group management protocol (IGMP) JOIN message for requesting joining the multicast group from the OITF entity apparatus 60 of a user domain, in operation 660.

In operation 670, the transport processing function entity apparatus 62 transmits the DVB STP multicast message containing the information regarding the IPTV service, which is received from the IPTV service discovery entity apparatus 63, to the OITF entity apparatus 60 belonging to a corresponding multicast group.

A user of the OITF entity apparatus 60 may access an application providing an IPTV communication service through URI information regarding the application providing the IPTV communication service, which is included in the information regarding the IPTV service.

FIG. 7 illustrates a structure of a communication offering record 710 including metadata regarding an IPTV communication service-providing application, according to an embodiment of the present invention.

The OITF entity apparatuses 30, 42, 52, and 60 receive the communication offering record 710 from the IPTV service provider discover entity apparatuses 31 and 44 or the IPT service discover entity apparatuses 32, 54, and 63 in response to the requests of the OITF entity apparatuses 30, 42, 52, and 60 or a multicast transmission of the IPTV service discovery entity apparatus 63.

The communication offering record 710 includes URI information regarding an application providing an IPTV communication service. In more detail, an 'initialAppLoc' 720 element indicates the URI information regarding the application providing the IPTV communication service. The user of the OITF entity apparatuses 30, 42, 52, and 60 may access the IPTV communication service-providing application through the URI information regarding the application providing the IPTV communication service that is represented by the 'initialAppLoc' 720 element included in the communication offering record 710.

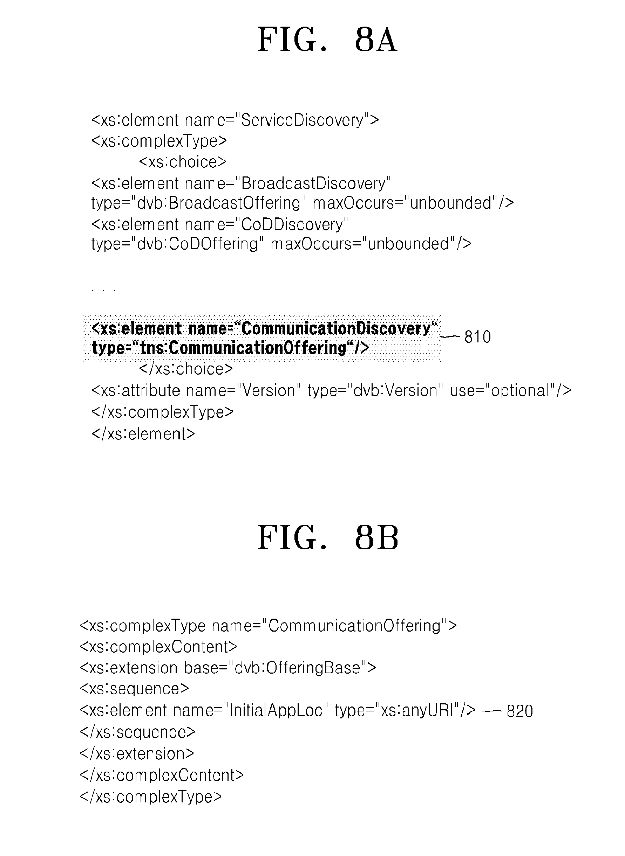

FIG. 8A illustrates a 'ServiceDiscovery' XML schema including a communication offering record, according to an embodiment of the present invention.

As shown in FIG. 8A, the 'ServiceDiscovery' element may include the communication offering record written in 'CommunicationOffering' type (810).

In the present embodiment, the 'Service Discovery' element includes the communication offering record; however, it is obvious that another element may include the communication offering record.

FIG. 8B shows an XML schema of a communication offering record according to an embodiment of the present invention.

The communication offering record is written in 'CommunicationOffering' type, and the 'CommunicationOffering' type includes an 'InitialAppLoc' element 820. The 'InitialAppLoc' element 820 indicates URI information regarding an IPTV communication service-providing application. The user of the OITF entity apparatuses 30, 42, 52, and 60 may access the IPTV communication service-providing application through the URI information regarding the IPTV communication service-providing application, which is indicated by the 'InitialAppLoc' element 820 included in the communication offering record.

It is obvious to one of ordinary skill in the art that the name of each of the elements may be changed or each of the elements may be changed to an attribute type.

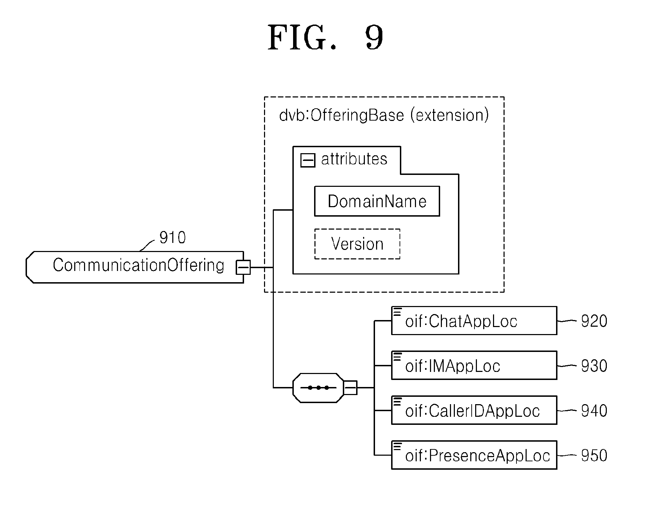

FIG. 9 shows a structure of a communication offering record including metadata regarding an application providing an IPTV communication service according to another embodiment of the present invention.

The communication offering record is written in the 'CommunicationOffering' type, and the 'CommunicationOffering' type includes a 'ChatAppLoc' element 920, an 'IMAppLoc' element 930, a 'CallerIDAppLoc' element 940, and a 'PresenceAppLoc' element 950. The 'ChatAppLoc' element 920 indicates URI information regarding a chatting application. The 'IMAppLoc' element 930 indicates URI information regarding an application providing a message service. The 'CallerIDAppLoc' element 940 indicates URI information regarding an application using a caller ID. The 'PresenceAppLoc' element 950 indicates URI information regarding a presence application using an on-line status of the user and a location of the user on a system such as VOIP.

The user of the OITF entity apparatuses 30, 42, 52, and 60 may access each IPTV communication service-providing application through the URI information regarding the each IPTV communication service-providing application, which is indicated by the 'ChatAppLoc' element 920, the 'IMAppLoc' element 930, the 'CallerIDAppLoc' element 940, and the 'PresenceAppLoc' element 950 included in the communication offering record.

It is obvious to one of ordinary skill in the art that the name of each of the elements may be changed or each of the elements may be changed to an attribute type.

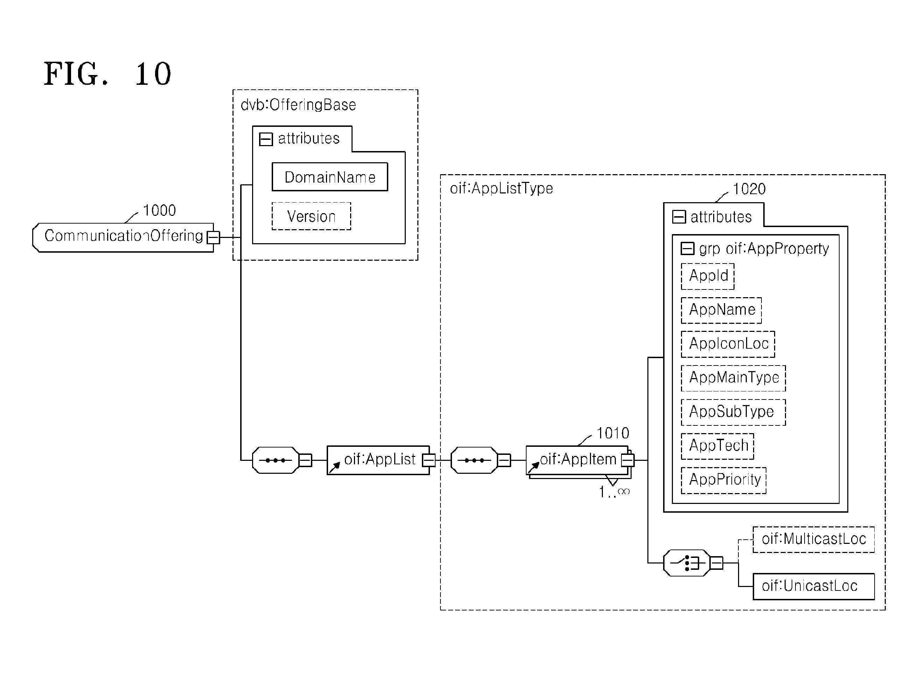

FIG. 10 shows a structure of a communication offering record including metadata regarding an IPTV communication service-providing application, according to another embodiment of the present invention.

The communication offering record is written in the 'CommunicationOffering' type, and the 'CommunicationOffering' type includes an 'AppList' element and an 'Appltem' element 1010 hierarchically.

The 'Appltem' element 1010 may include 'Appld', 'AppName', 'AppIconLoc', 'AppMainType', 'AppSubType', 'AppTech', and 'AppPriority' as attributes.

The'Appld' indicates an ID of the application, 'AppName' indicates the name of application, and 'ApplconLoc' indicates URI information for receiving an application icon. The 'AppMainType' and 'AppSubType' indicate the kind of the application, 'AppTech' indicates information about a technology used in the application, and 'AppPriority' indicates a priority of the application.

In addition, the 'Appltem' element 1010 may include 'MulticastLoc' and 'UnicastLoc' as elements. The 'MulticastLoc' indicates URI information for accessing the application through the multicast, and 'UnicastLoc' indicates URI information for accessing the application through the unicast.

The user of the OITF entity apparatuses 30, 42, 52, and 60 may access each IPTV communication service-providing application through the URI information regarding the IPTV communication service-providing application, which is indicated by the 'UnicastLoc' element.

It is obvious to one of ordinary skill in the art that the name and location of each of the elements and attributes in the XML schema of the communication offering record may be changed.

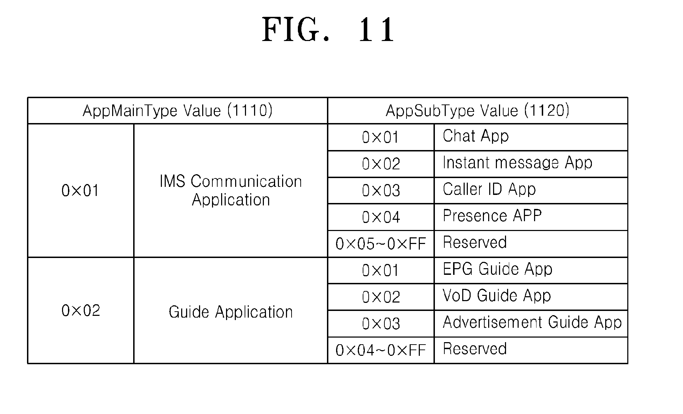

FIG. 11 is a table showing AppMainType values and AppSubType values of a communication offering record, according to another embodiment of the present invention.

As illustrated with reference to FIG. 10, the communication offering record includes 'AppMainType' and 'AppSubType' in the 'Appltem' element 1010. For example, the 'AppMainType' value of the IPTV communication service-providing application may be written as 'Ox01'. In addition, 'AppSubType' values of the chatting application, the instant message application, the caller ID application, and the presence application may be respectively written as 'Ox01', 'Ox02', 'Ox03', and 'Ox04'.

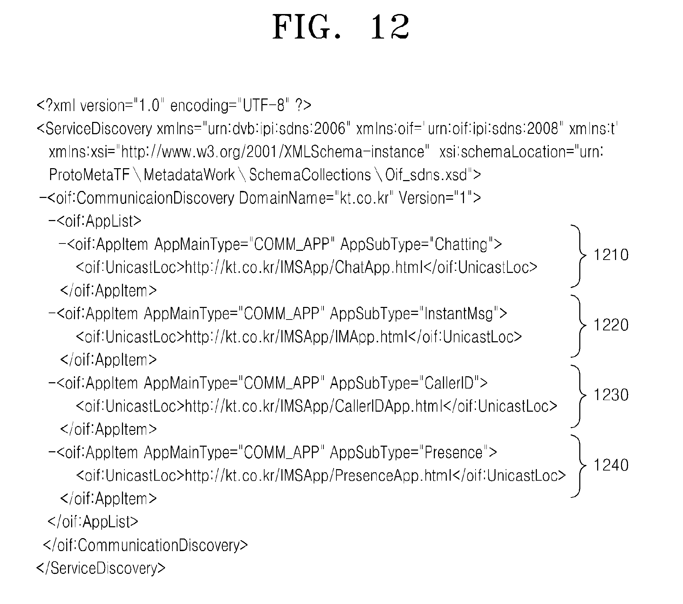

FIG. 12 shows XML-based metadata according to a structure of communication offering record, according to another embodiment of the present invention.

URI information of each of the chatting application, the instant message application, the caller ID application, and the presence application is written according to the structure of the communication offering record described with reference to FIGS. 10 and 11.

'CommunicationDiscovery' element of the 'CommunicationOffering' type includes four 'Appltem' elements with respect to the applications. Each of the applications is recognized by combination of the 'AppMainType' value and the 'AppSubType' value, and the 'UnicastLoc' element includes URI information regarding applications providing the communication services.

As shown in FIG. 12, the chatting application has a 'COMM_APP' value corresponding to 'OxO1' as the 'AppMainType' value, and has a 'Chatting' value corresponding to 'Ox01' as the 'AppSubType' value. The user of the OITF entity apparatuses 30, 42, 52, and 60 may access the chatting application provided by the corresponding service provider through URI 'http://kt.co.kr/IMSApp/ChatApp.html' indicated by the 'UnicastLoc' element.

The instant message application has a 'COMM_APP' value corresponding to 'OxO1' as the'AppMainType' value, and has an 'InstantMsg' value corresponding to 'OxO2' as the 'AppSubType' value. The user of the OITF entity apparatuses 30, 42, 52, and 60 may access the instant message application provided by the corresponding service provider through URL 'http://kt.co.kr/IMSApp/IMApp.html' indicated by the 'UnicastLoc' element.

The caller ID application has a 'COMM_APP' value corresponding to 'Ox01' as the'AppMainType' value, and has 'CallerID' value corresponding to 'Ox03' as the 'AppSubType' value. The user of the OITF entity apparatuses 30, 42, 52, and 60 may access the caller ID application provided by the corresponding service provider through URL 'http://kt.co.kr/IMSApp/CallerIDApp.html' indicated by the 'UnicastLoc' element.

The presence application has a 'COMM_APP' value corresponding to 'Ox01' as the 'AppMainType' value, and has 'Presence' value corresponding to 'Ox04' as the 'AppSubType' value. The user of the OITF entity apparatuses 30, 42, 52, and 60 may access the presence application provided by the corresponding service provider through URL 'http://kt.co.kr/IMSApp/PresenceApp.html' indicated by the 'UnicastLoc' element.

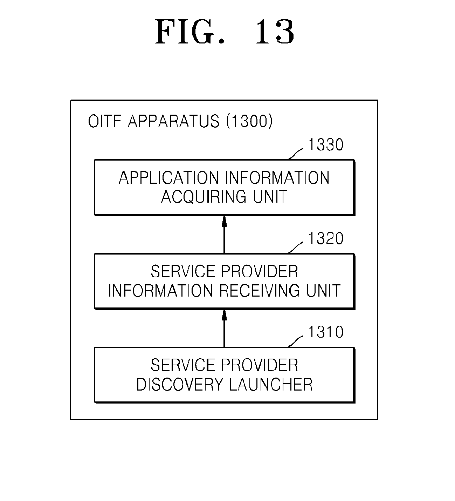

FIG. 13 is a block diagram of an OITF apparatus 1300 according to an embodiment of the present invention.

The OITF apparatus 1300 of the present embodiment includes a service provider discovery launcher 1310, a service provider information receiving unit 1320, and an application information acquiring unit 1330.

The service provider discovery launcher 1310 acquires IP address information for initiating the IPTV service provider discovery at an entry point for searching for the IPTV service provider.

The service provider information receiving unit 1320 receives information regarding the IPTV service provider from an IPTV service provider discovery entity apparatus by using the IP address information acquired by the service provider discovery launcher 1310. The information regarding the IPTV service provider may be written in XML; however, it is obvious to one of ordinary skill in the art that other technical formats may be used.

The application information acquiring unit 1330 selectively acquires information regarding at least an application for providing IPTV communication service based on the information regarding the IPTV service provider. The application for providing the IPTV communication service may include at least one of the chatting application, the instant message application, the caller ID application, and the presence application. The information regarding the application for providing the IPTV communication service may be written in XML; however, it is obvious to one of ordinary skill in the art that other technical formats may be used.

When the information regarding the IPTV service provider received by the service provider information receiving unit 1320 is URI information regarding the IPTV service discover entity apparatus, which may search for at least one service provided by the IPTV service provider, the application information acquiring unit 1330 acquires information regarding at least one application for providing the IPTV communication service from the IPTV service discovery entity apparatus by using the URI information.

The information regarding the application for providing the IPTV communication service may include URI information regarding an application for providing the IPTV communication service, which may access at least one IPTV communication service provided by the IPTV service provider.

According to another embodiment of the present invention, the information regarding the application for providing the IPTV communication service may include at least one of an application ID that may access at least one IPTV communication service provided by the IPTV service provider, the name of application, URI information for receiving the application icon, a kind of application, information regarding technology used in the application, priority of the application, URI information for accessing the application through the multicast, and URI information for accessing the application through the unicast. The user of the OITF entity apparatus may access each of the applications by using the URI information for accessing the application through the unicast.

According to another embodiment of the present invention, the information regarding the application for providing the IPTV communication service may include URI information regarding at least one of the chatting application, the instant message application, the caller ID application, and the presence application provided by the IPTV service provider.

The information regarding the application for providing the IPTV communication service may be provided as a part of the communication offering record.

While the present invention has been particularly shown and described with reference to exemplary embodiments thereof, it will be understood by those of ordinary skill in the art that various changes in form and details may be made therein without departing from the spirit and scope of the present invention as defined by the following claims.

For example, the apparatus for transmitting/receiving information regarding an application for providing IPTV communication service may include a bus coupled to each of units in the device shown in FIGS. 13 and 14

, and at least one processor coupled to the bus. In addition, the apparatus may include a memory that is coupled to the bus in order to store commands, received messages, and generated messages, and coupled to the at least one processor for performing the above commands.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc. The computer readable recording medium can also be distributed over network coupled computer systems so that the computer readable code is stored and executed in a distributed fashion.

## Claims

1. A method of receiving information regarding an application for providing an internet protocol television (IPTV) communication service, the method comprising:
acquiring IP address information for initiating an IPTV service provider discovery at an entry point for searching for a service provider;
receiving information regarding an IPTV service provider from an IPTV service provider discovery entity apparatus by using the IP address information; and
acquiring information regarding the application for providing the IPTV communication service based on the information regarding the IPTV service provider.

2. The method of claim 1, wherein the application for providing the IPTV communication service includes at least one of a chatting application, an instant message application, a caller identification (ID) application, and a presence application.

3. The method of claim 1, wherein when the information regarding the IPTV service provider includes information for acquiring the application for providing the IPTV communication service, further comprising acquiring information regarding at least one application for providing the IPTV communication service from the IPTV service discovery entity apparatus by using the information for acquiring the application for providing the IPTV communication service.

4. The method of claim 1, wherein the information regarding the application for providing the IPTV communication service includes uniform resource identifier (URI) information regarding the application for providing the IPTV communication service, which may access at least one IPTV communication service provided by the IPTV service provider.

5. The method of claim 1, wherein the information regarding the application for providing the IPTV communication service may include at least one of an application ID that may access at least one IPTV communication service provided by the IPTV service provider, name of the application, URI information for receiving the application icon, a kind of the application, information regarding technology used in the application, priority of the application, URI information for accessing the application through multicast, and URI information for accessing the application through unicast.

6. The method of claim 2, wherein the information regarding the application for providing the IPTV communication service may include URI information regarding at least one of the chatting application, the instant message application, the caller ID application, and the presence application provided by the IPTV service provider.

7. The method of claim 1, wherein the information regarding the application for providing the IPTV communication service is provided as a part of a communication offering record.

8. The method of claim 1, wherein the information regarding the IPTV service provider and the information regarding the application for providing the IPTV communication service are written in extensible markup language (XML).

9. An open internet protocol television (IPTV) terminal function (OITF) apparatus comprising:
a service provider discovery launcher for acquiring IP address information for initiating an IPTV service provider discovery at an entry point for searching for the service provider;
a service provider information receiving unit for receiving information regarding the IPTV service provider from an IPTV service provider discovery entity apparatus by using the IP address information; and
an application information acquiring unit for acquiring information regarding an application for providing an IPTV communication service based on the information regarding the IPTV service provider.

10. The OITF apparatus of claim 9, wherein the application for providing the IPTV communication service includes at least one of a chatting application, an instant message application, a caller identification (ID) application, and a presence application.

11. The OITF apparatus of claim 9, wherein when the information regarding the IPTV service provider includes information for acquiring the application for providing the IPTV communication service, the application information acquiring unit acquires information regarding at least one application for providing the IPTV communication service from the IPTV service discovery entity apparatus by using the information for acquiring the application for providing the IPTV communication service.

12. The OITF apparatus of claim 9, wherein the information regarding the application for providing the IPTV communication service includes uniform resource identifier (URI) information regarding the application for providing the IPTV communication service, which may access at least one IPTV communication service provided by the IPTV service provider.

13. The OITF apparatus of claim 9, wherein the information regarding the application for providing the IPTV communication service may include at least one of an application ID that may access at least one IPTV communication service provided by the IPTV service provider, name of the application, URI information for receiving the application icon, a kind of the application, information regarding technology used in the application, priority of the application, URI information for accessing the application through multicast, and URI information for accessing the application through unicast.

14. The OITF apparatus of claim 10, wherein the information regarding the application for providing the IPTV communication service may include URI information regarding at least one of the chatting application, the instant message application, the caller ID application, and the presence application provided by the IPTV service provider.

15. The OITF apparatus of claim 9, wherein the information regarding the application for providing the IPTV communication service is provided as a part of a communication offering record.

16. The OITF apparatus of claim 9, wherein the information regarding the IPTV service provider and the information regarding the application for providing the IPTV communication service are written in extensible markup language (XML).

17. A computer readable recording medium having embodied thereon a computer program for executing the method according to one of claims 1 through 8.
